# EUROPÄISCHE PATENTSCHRIFT

(11) **EP 2 927 044 B1**
(45) Veröffentlichungstag und Bekanntmachung des Hinweises auf die Patenterteilung: **22.02.2017**
(21) Anmeldenummer: 14162768.7
(22) Anmeldetag: 31.03.2014
(51) Int. Cl.: B60L 3/00, B60L 9/00, B60L 1/00, H02H 11/00, H02J 3/14, H02M 7/06, H02J 3/46, H02M 7/493

(54) **Verfahren zum Betreiben paralleler Hilfsbetriebeumrichter in einem Schienenfahrzeug**
Method for operating parallel auxiliary converters in a railway vehicle
Procédé de fonctionnement d'un convertisseur auxiliaire parallèle dans un véhicule sur rail

(43) Veröffentlichungstag der Anmeldung: 07.10.2015
(73) Patentinhaber: Siemens Aktiengesellschaft, 80333 München (DE)
(72) Erfinder: Echkilev, Nikolaj, 41542 Dormagen (DE); Wellner, Andreas, 47803 Krefeld (DE); Wu, Xiao Qiang, 47803 Krefeld (DE)

(56) Entgegenhaltungen:
- DE-A1- 10 301 275
- DE-A1-102008 009 512
- JP-A- 2012 165 509
- US-A1- 2006 255 656

## Beschreibung

Die Erfindung betrifft ein Verfahren zur Versorgung von elektrischen Verbrauchern eines Fahrzeugs mit elektrischer Energie. Die Erfindung betrifft weiter ein Energieversorgungssystem eines Fahrzeugs, insbesondere eines Schienenfahrzeugs, zur Durchführung dieses Verfahrens.

Ein Hilfsbetriebeumrichter wird verwendet, um ein Bordnetz eines Fahrzeugs und die daran angeschlossenen Verbraucher mit elektrischer Energie zu versorgen. Typische Verbraucher eines Fahrzeugs, insbesondere eines Schienenfahrzeugs, sind Bordelektronik zur Steuerung/Regelung des Fahrzeugs, Kompressoren, Klimaanlagen, Beleuchtung, Steckdosen, etc. Die Verbraucher werden unterteilt in eine Gruppe dreiphasiger Verbraucher und eine Gruppe einphasiger Verbraucher.

Die dreiphasigen Verbraucher werden über ein dreiphasiges Energieversorgungsnetz, wie beispielsweise ein Drehstromnetz gespeist. Dieses Energieversorgungsnetz umfasst drei Phasen, die häufig als L1, L2 und L3 bezeichnet werden. Meistens verfügt dieses dreiphasige Energieversorgungsnetz über keinen Neutralleiter (N-Leiter). Jedoch sind auch Anwendungen bekannt, in denen das dreiphasige Energieversorgungsnetz mit einem N-Leiter ausgeführt ist. Der N-Leiter stellt die Betriebserdung dar. Insbesondere in Schienenfahrzeugen ist das dreiphasige Energieversorgungsnetz häufig als eine 3AC-Zugsammelschiene ausgeführt.

Anders verhält es sich bei den einphasigen Verbrauchern. Diese werden über eine Phase und einen Neutralleiter mit Energie versorgt. Somit weist das einphasige Energieversorgungsnetz einen N-Leiter auf. Aus Sicherheitsgründen ist dieser niederohmig mit dem Erdpotential verbunden.

Aufgabe des Hilfsbetriebeumrichters ist die Speisung dieser Energieversorgungsnetze. Auch die Speisung durch mehrere parallel geschaltete Hilfsbetriebeumrichter kommt zur Erhöhung der Redundanz und damit zur Erhöhung der Ausfallsicherheit der Energieversorgung zum Einsatz.

Die für den Betrieb des Fahrzeugs zwingend erforderlichen Komponenten werden über das dreiphasige Energieversorgungsnetz versorgt. Auch wenn für diese Komponenten teilweise noch für einen Ausfall der Energieversorgung eine zusätzliche Versorgung über Batterien existiert, zielt die Konstruktion des Fahrzeugs darauf ab, dieses dreiphasige Energieversorgungsnetz möglichst ausfallsicher zu gestalten. Ein besonders ausfallsicheres Netz stellt ein sogenanntes IT-Netz dar. Das IT-Netz, auch IT-System genannt, ist eine Realisierungsart eines Netzes, insbesondere eines Niederspannungsnetzes, zur elektrischen Energieversorgung mit erhöhter Ausfallsicherheit bei Erdschlussfehlern. Beim IT-Netz werden die Schutzerdung und die Betriebserdung unterschiedlich ausgeführt. Die Schutzerdung dient der Berührsicherheit von Komponenten durch Personen. Die Betriebserdung wird durch einen N-Leiter ausgeführt. Sofern die Betriebserdung in dem dreiphasigen Energieversorgungsnetz überhaupt vorhanden ist, wird diese isoliert, d.h. offen, ausgeführt. Eine hochohmige Erdung des N-Leiters ist dabei zulässig. Dadurch kommt es im Normalbetrieb zu keiner niederohmigen Verbindung zwischen den Phasen L1, L2 und L3 des Netzes und den geerdeten Teilen. Damit besitzt das IT-Netz kein definiertes Spannungspotential gegenüber dem Erdpotential und es wird als potentialfrei bezeichnet. Dadurch kann das Energieversorgungsnetz auch dann weiter betrieben werden, wenn es in einer der Phasen zu einem Erdschluss kommt. Eine Warnmeldung fordert im Falle eines erkannten Erdschlusses üblicherweise dazu auf, zeitnah eine Wartung durchzuführen, um den Erdschluss zu beseitigen. Erst ein weiterer Erdschluss im Energieversorgungsnetz kann zu einem Ausfall des Energieversorgungsnetzes führen. Somit eignet sich ein IT-Netzes im besonderen Maße für die Realisierung eines ausfallsicheren Energieversorgungsnetzes eines Fahrzeugs.

Neben dem dreiphasigen, ausfallsicheren Energieversorgungsnetz besteht darüber hinaus oftmals, insbesondere in Europa, der Bedarf, Verbraucher kleiner Leistung, die keinen so große Anforderung an die Versorgungssicherheit haben, wie beispielsweise Steckdosen oder Lampen lediglich einphasig (z.B. mit 230V, 50Hz) zu betreiben. Für diese Verbraucher werden ein oder mehrere zusätzliche Transformatoren oder N-Leiterbildner benötigt, die aus dem vorhandenen dreiphasigen Energieversorgungsnetz ein einphasiges Spannungssystem erzeugen. Damit kann das dreiphasige Energieversorgungsnetz als IT-Netz, d.h. potentialfrei, ausgeführt werden und das einphasige Energieversorgungsnetz wird mit geerdetem N-Leiter ausgeführt. Vor allem Kunden aus dem asiatischen und amerikanischen Räumen wünschen in Schienenfahrzeuge oft zusätzlich einen belastbaren N-Leiter, um Einphasenverbraucher einfacher auch direkt an eine Phase des dreiphasigen Energieversorgungsnetzes anschließen zu können. Aus Sicherheitsgründen, in Deutschland beispielsweise u.a. festgelegt durch die Norm DIN VDE 0100, ist der N-Leiter auf der Fahrzeugseite permanent geerdet. Diese Realisierungsart wird auch als TT-Netz oder TT-System bezeichnet.

Durch den oder die zusätzlichen Transformatoren kann ein Hilfsbetriebeumrichter ein Energieversorgungsnetz eines Fahrzeugs speisen, welches sowohl ein potentialfreies dreiphasiges Energieversorgungsnetz als auch ein einphasiges Energieversorgungsnetz mit geerdetem N-Leiter umfasst. Ein Erdschluss im dreiphasigen Energieversorgungsnetz führt aufgrund der galvanischen Trennung zwischen dem dreiphasigen und einphasigen Energieversorgungsnetz zu keinem Ausfall dieser beiden Energieversorgungsnetze.

Die Erdung des N-Leiters hat den Nachteil, dass jeder Erdschluss in der Phase des einphasigen Energieversorgungsnetzes zu Kurzschlussströmen im Hilfsbetriebeumrichter führt. Diese Kurzschlussströme können durch eine geeignete Auslegung des Transformators, beispielsweise einer hohen Kurzschlussspannung uₖ, reduziert werden. Zusätzlich kann zum Schutz des Hilfsbetriebeumrichters in diesem Fall eine schnelle Abschaltung des einphasigen Energieversorgungsnetzes erfolgen, um die Halbleiter des Hilfsbetriebeumrichters vor Beschädigung zu schützen.

Aus diesem Grunde werden die für den Betrieb des Fahrzeugs zwingend erforderlichen Komponenten nicht aus dem einphasigen Energieversorgungsnetz sondern aus dem dreiphasigen Energieversorgungsnetz mit elektrischer Energie versorgt, um den Weiterbetrieb des Fahrzeugs zu ermöglichen.

Der Erfindung liegt die Aufgabe zugrunde, ein Verfahren zur Versorgung von Verbrauchern eines Fahrzeugs mit elektrischer Energie anzugeben, mit dem der Fehlerfall eines Erdschlusses, insbesondere bei Speisung der Verbraucher mit wechselspannungsseitig parallel geschalteten Hilfsbetriebeumrichtern, sicher und zudem einfach und kostengünstig beherrscht werden kann.

Diese Aufgabe wird durch Verfahren zur Versorgung von elektrischen Verbrauchern eines Fahrzeugs mit elektrischer Energie mittels wechselspannungsseitig parallel geschalteter Hilfsbetriebeumrichter gelöst, wobei im Falle eines Erdschlusses der Stromfluss zwischen Hilfsbetriebeumrichter und einem geerdeten N-Leiter eines Energieversorgungsnetz unterbrochen wird, wobei die wechselspannungsseitig parallel geschalteten Hilfsbetriebeumrichter grundwellen- und pulssynchron betrieben werden.

Diese Aufgabe wird weiter durch ein Energieversorgungssystem eines Fahrzeugs, insbesondere eines Schienenfahrzeugs gelöst, dass zur Durchführung dieses Verfahrens bestimmt ist und mindestens zwei parallel angeordnete Hilfsbetriebeumrichter, ein Energieversorgungsnetz zur Versorgung von elektrischen Verbrauchern und mindestens einen Schalter zur Unterbrechung eines Stromflusses zwischen Hilfsbetriebeumrichter und Energieversorgungsnetz umfasst.

Der Erfindung liegt die Erkenntnis zugrunde, dass sich ein Fehler, hervorgerufen durch einen Erdschluss, nicht zu einem Ausfall des dreiphasigen Energieversorgungsnetzes führt, wenn der Stromfluss zwischen Hilfsbetriebeumrichter und N-Leiter unterbrochen wird. Durch das Unterbrechen dieses Stromflusses kann der Hilfsbetriebeumrichter potentialfrei betrieben werden. Das Erdpotential wird dann durch den Erdschluss festgelegt. Dies entspricht einem Betrieb als IT-Netz. Das erfindungsgemäße Verfahren ermöglicht einen dynamischen Wechsel zwischen Energieversorgungsnetz als TT-Netz mit geerdetem N-Leiter zu einem Energieversorgungsnetz als IT-Netz bei Auftreten eines Erdschlusses, um die Versorgungssicherheit des dreiphasigen Energieversorgungsnetzes und die daran angeschlossenen Verbraucher sicherzustellen. Ein vorhandenes einphasiges Energieversorgungsnetz wird dann nicht mehr zur Energieübertragung genutzt, da durch die Unterbrechung des Stromflusses des N-Leiters keine Energie mehr übertragen werden kann. Somit wird mit diesem Verfahren ein ausfallsicherer Betrieb des dreiphasigen Energieversorgungsnetzes gewährleistet. Dieses Verfahren bietet den Vorteil, dass es im Vergleich zu bisher bekannten Verfahren keinen Transformator erfordert. Dies macht den Hilfsbetriebeumrichter, in dem der Transformator meistens angeordnet ist, und auch das Energieversorgungsnetz des Fahrzeugs deutlich kostengünstiger und leichter.

Durch den Wegfall des Transformators ergibt sich die Problematik, dass die Hilfsbetriebeumrichter über die Erdverbindung miteinander gekoppelt sind. Im Allgemeinen entstehen Ausgleichsstöme zwischen den parallel geschalteten Hilfsbetriebeumrichtern, die eine zuverlässige Versorgung der Verbraucher des Fahrzeugs unmöglich macht. Es hat sich allerdings gezeigt, dass ein Parallelbetrieb der parallel geschalteten Hilfsbetriebeumrichter dann möglich ist, wenn diese Hilfsbetriebeumrichter grundwellen- und pulssynchron betrieben werden. Der Vorteil des grundwellen- und pulssynchronen Betriebs ist, dass Ausgleichsströme zwischen den Hilfsbetriebeumrichtern vermieden oder zumindest soweit reduziert werden, dass ein Parallelbetrieb der Hilfsbetriebeumrichter möglich ist. Dadurch wird die Parallelschaltung der Hilfsbetriebeumrichter erst sinnvoll möglich.

Durch die parallele Anordnung kann selbst bei Ausfall eines Hilfsbetriebeumrichters die Versorgung der elektrischen Verbraucher des Energieversorgungsnetzes über die im Betrieb verbleibenden Hilfsbetriebeumrichter weiterhin sichergestellt werden. Durch eine möglicherweise pulssynchrone Taktung der parallel geschalteten Hilfsbetriebeumrichter ist auch eine gleichmäßige Aufteilung der Leistung auf die einzelnen in Betrieb befindlichen Hilfsbetriebeumrichter realisiert. Vorteil der Parallelschaltung ist, dass man für die Speisung der elektrischen Verbraucher mehrere Hilfsbetriebeumrichter vorsehen kann, die eine geringe Baugröße aufweisen und einfach in bestehenden Bauraum integriert werden können. Ein weiterer Vorteil ist, dass durch die parallel geschalteten Hilfsbetriebeumrichter eine Redundanz geschaffen wird, so dass auch bei Ausfall eines oder mehrerer Hilfsbetriebeumrichter die elektrischen Verbraucher zumindest ein Teil der elektrischen Verbraucher, insbesondere die für den Betrieb des Fahrzeugs zwingend erforderlichen Verbraucher, noch zuverlässig mit elektrischer Energie versorgt werden kann.

Bei einer weiteren vorteilhaften Ausgestaltungsform ist das Verfahren dazu bestimmt, den Betrieb des Hilfsbetriebeumrichters auch bei einem Erdschluss in einem für die Versorgung der elektrischen Verbraucher vorgesehenen Energieversorgungsnetz sicherzustellen. Ein Erdschluss im Energieversorgungsnetz ist ein häufiger Grund für einen Ausfall des entsprechenden Energieversorgungsnetzes. Gerade für den Fall des Erdschlusses in dem Energieversorgungsnetz stellt das Verfahren eine besonders einfache Möglichkeit dar, den Betrieb der angeschlossenen Verbraucher ohne Transformator weiterhin aufrecht zu erhalten.

Bei einer weiteren vorteilhaften Ausgestaltungsform handelt es sich bei dem Fahrzeug um ein Schienenfahrzeug, bei dem die wechselspannungsseitig parallel geschalteten Hilfsbetriebeumrichter ein Bordnetz des Schienenfahrzeugs speisen. Gerade bei Schienenfahrzeugen werden hohe Ansprüche an die Verfügbarkeit des Fahrzeugs gestellt. Der Ausfall eines Fahrzeugs muss aufgrund der Gefahrensituation durch ein Liegenbleiben auf freier Strecke oder, besonders gefährlich in Tunneln, und der dann notwendigen Aktivitäten, wie aufwendige Bergung, weitestgehend vermieden werden. Zusätzlich ist bei liegengebliebenen Schienenfahrzeugen mit größeren, teils erheblichen Störungen in weiten Teilen des Schienennetzes zu rechnen. Auch die Kundenunzufriedenheit aufgrund von dadurch bedingten Verspätungen führt zu wirtschaftlichen Einbußen und muss verhindert werden. Im Schienenfahrzeug ist eine Erdung im Gegensatz zu beispielsweise gummibereiften Fahrzeugen einfach herstellbar. Diese erfolgt in der Regel mittels eines Kontaktes über die Radsätze zur Schiene, die auf Erdpotential liegt. Auf diese Weise kann ein N-Leiter, insbesondere in einphasigen Energieversorgungsnetzen auf einfache und kostengünstige Weise realisiert werden. Um mit dieser Anordnung einen sicheren Betrieb der wechselspannungsseitig parallel geschalteten 3AC-Hilfsbetriebeumrichter auch im Fall eines Erdschlusses sicherzustellen, kommt das erfindungsgemäße Verfahren zum Einsatz. Dieses Verfahren erlaubt eine sichere elektrische Versorgung von Verbrauchern, die zum Betrieb des Schienenfahrzeugs zwingend erforderlich sind.

Bei einer weiteren vorteilhaften Ausgestaltungsform wird der Stromfluss durch Öffnen eines Schalters unterbrochen. Das Öffnen eines Schalters stellt eine einfache Möglichkeit dar, den Stromfluss zwischen 3AC-Hilfsbetriebeumrichter und Energieversorgungsnetz zu unterbrechen. Der Schalter kann dabei im Hilfsbetriebeumrichter, im Energieversorgungsnetz oder in einer Zuleitung zwischen 3AC-Hilfsbetriebeumrichter und Energieversorgungsnetz geschaltet sein. Als besonders günstig hat es sich erwiesen, den Schalter im Behälter des Hilfsbetriebeumrichters anzuordnen. Da die Information über einen Erdschlusses der Regelung/Steuerung des Hilfsbetriebeumrichters bekannt ist, kann dieser schnell auf diesen Zustand reagieren, wenn der Schalter innerhalb des Behälters des Hilfsbetriebeumrichters angeordnet ist und von der Regelung/Steuerung des Hilfsbetriebeumrichters angesteuert wird. Somit ist ein Schutz des 3AC-Hilfsbetriebeumrichters auf besonders einfache Weise realisierbar.

Bei einer weiteren vorteilhaften Ausgestaltungsform werden bei dem Verfahren mit mindestens zwei Hilfsbetriebeumrichtern bei Erkennung eines Erdschlusses die folgenden Schritte durchgeführt:
- Abschalten der Hilfsbetriebeumrichter
- Öffnen des Schalters zur Unterbrechung des Stromflusses zwischen den Hilfsbetriebeumrichter und dem Energieversorgungsnetz
- Einschalten eines ersten Hilfsbetriebeumrichters
- Einschalten mindestens eines weiteren Hilfsbetriebeumrichters, wobei der weitere Hilfsbetriebeumrichter sich beim Einschaltvorgang, insbesondere bezüglich Frequenz und Spannungshöhe auf den ersten Hilfsbetriebeumrichter synchronisiert und
- nach festgestellter Erdschlussfreiheit der Schalter zur Unterbrechung des Stromflusses zwischen den Hilfsbetriebeumrichtern und dem Energieversorgungsnetz wieder geschlossen wird.

Das Auftreten eines Erdschlusses im Energieversorgungsnetz führt nicht zur Beschädigung eines der Hilfsbetriebeumrichter, die vorzugsweise als 3AC-Hilfsbetriebeumrichter derart ausgestaltet sind um mindestens ein 3AC Energieversorgungsnetz mit Energie versorgen zu können. Darüber hinaus wird sichergestellt, dass bei Auftreten eines Erdschlusses Ströme, die zur Beschädigung des 3AC-Hilfsbetriebeumrichters führen können, vermieden werden. Durch die weiteren Verfahrensschritte ist sichergestellt, dass bei Auftreten eines Erdschlusses ein Energieversorgungsnetz, vorzugsweise das dreiphasige Energieversorgungsnetz, weiter mit Energie versorgt werden kann. Dazu wird ein erster 3AC-Hilfsbetriebeumrichter in einen ersten Schritt mit dem Energieversorgungsnetz wieder verbunden. Parallel geschaltete weitere 3AC-Hilfsbetriebeumrichter synchronisieren sich in Bezug auf ihre am Ausgang anliegende Spannung auf den ersten 3AC-Hilfsbetriebeumrichter. Der Synchronisierungsvorgang ist dann abgeschlossen, wenn der weitere 3AC-Hilfsbetriebeumrichter am Ausgang insbesondere in Bezug auf Spannungshöhe, Frequenz und Phasenlage die gleiche Ausgangsspannung bereitstellt wie der erste 3AC-Hilfsbetriebeumrichter. Dann kann auch der weitere 3AC-Hilfsbetriebeumrichter zur Speisung der elektrischen Verbraucher zum Energieversorgungsnetz wieder zugeschaltet werden. Dies gilt für alle weiteren 3AC-Hilfsbetriebeumrichter. Dieses Zuschalten der weiteren Hilfsbetriebeumrichter kann parallel und/oder sequentiell erfolgen. Wird durch geeignete Mittel festgestellt, dass kein Erdschluss mehr vorhanden ist, d.h. dass Erdschlussfreiheit besteht, kann auch der Stromfluss zwischen 3AC-Hilfsbetriebeumrichter und dem Energieversorgungsnetz wieder hergestellt werden. Dies kann beispielsweise durch ein Zuschalten der elektrischen Verbindung zwischen 3AC-Hilfsbetriebeumrichter und N-Leiter erreicht werden.

Bei einer weiteren vorteilhaften Ausgestaltungsform weist das Energieversorgungssystem mindestens eine Erdschlussüberwachung auf. Das Energieversorgungsnetz umfasst dabei ein dreiphasiges Energieversorgungsnetz (3AC) und einen N-Leiter. Diese Einrichtung ist geeignet, einen Erdschluss einfach und zuverlässig zu erkennen. Durch diese Einrichtung kann die Information über einen Erdschluss an eine Steuerung oder Regelung des Hilfsbetriebeumrichters übergeben werden mit Hilfe der das erfindungsgemäße Verfahren zum Betreiben der parallel angeordneten 3AC-Hilfsbetriebeumrichter durchgeführt werden kann. Der Vorteil ist, dass für dieses Verfahren am Markt befindliche Erdschlussüberwachungseinrichtungen genutzt werden können. Eine Entwicklung eines speziellen Gerätes für die Durchführung des zuvor beschriebenen Verfahrens ist nicht erforderlich. Somit ist eine kostengünstige Realisierung einer Erdschlussüberwachung eines Energieversorgungssystems gewährleistet.

Bei einer weiteren vorteilhaften Ausgestaltungsform sind die Hilfsbetriebeumrichter eines Energieversorgungssystems elektrisch parallel angeordnet. Auch bei dieser Ausgestaltungsform sind die Hilfsbetriebeumrichter vorzugsweise als 3AC-Hilfsbetriebeumrichter ausgestaltet. Durch die parallele Anordnung kann selbst bei Ausfall eines Hilfsbetriebeumrichters die Versorgung der elektrischen Verbraucher des Energieversorgungsnetzes über die im Betrieb verbleibenden Hilfsbetriebeumrichter weiterhin sichergestellt werden. Durch eine möglicherweise pulssynchrone Taktung der parallel geschalteten 3AC-Hilfsbetriebeumrichter ist auch eine gleichmäßige Aufteilung der Leistung auf die einzelnen in Betrieb befindlichen 3AC-Hilfsbetriebeumrichter realisiert. Vorteil der Parallelschaltung ist, dass man für die Speisung der elektrischen Verbraucher mehrere 3AC-Hilfsbetriebeumrichter vorsieht, die eine geringe Baugröße aufweisen können und einfach im bestehenden Bauraum integriert werden können. Ein weiterer Vorteil ist, dass durch die parallel geschalteten 3AC-Hilfsbetriebeumrichter eine Redundanz geschaffen wird, so dass auch bei Ausfall eines oder mehrerer 3AC-Hilfsbetriebeumrichter die elektrischen Verbraucher zumindest ein Teil der elektrischen Verbraucher, insbesondere die für den Betrieb des Fahrzeugs zwingend erforderlichen Verbraucher, noch mit elektrischer Energie versorgt werden kann.

Bei einer weiteren vorteilhaften Ausgestaltungsform weist das Energieversorgungssystem ein dreiphasiges Energieversorgungsnetz und ein einphasiges Energieversorgungsnetz auf, die galvanisch miteinander verbunden sind. Durch die Anwendung des erfindungsgemäßen Verfahrens kann auf die galvanische Trennung des einphasigen und des dreiphasigen Energieversorgungsnetzes verzichtet werden. Üblicherweise wird eine derartige galvanische Entkopplung, auch als galvanische Trennung bezeichnet, durch einen Transformator sichergestellt. Da dieser für das erfindungsgemäße Energieversorgungssystem nicht mehr erforderlich ist, wird dieses deutlich kostengünstiger und leichter.

Bei einer weiteren vorteilhaften Ausgestaltungsform ist die galvanische Verbindung zwischen dem einphasigen Energieversorgungsnetz und dem dreiphasigen Energieversorgungsnetz über den Hilfsbetriebeumrichter ausgeführt. Der Vorteil dieser Anordnung ist, dass Stromflüsse im Falle eines Erdschlusses über den Hilfsbetriebeumrichter fließen und von diesem über seine Steuerung/Regelung erkannt werden können. Durch diese Detektion ist eine sichere Anwendung des erfindungsgemäßen Verfahrens möglich. Diese Eigenschaft stellt sicher, dass der Betrieb des Hilfsbetriebeumrichters auch bei Vorliegen eines Erdschlusses weiterhin sicher aufrechterhalten werden kann.

Im Folgenden wird die Erfindung anhand der in den Figuren dargestellten Ausführungsbeispiele näher beschrieben und erläutert. Es zeigen:
- FIG 1: ein erstes Prinzipschaltbild eines erfindungsgemäßen Bordnetzes eines Fahrzeugs,
- FIG 2: ein weiteres Prinzipschaltbild eines erfindungsgemäßen Bordnetzes mit einem separaten einphasigen Energieversorgungsnetz,
- FIG 3: ein weiteres Prinzipschaltbild eines erfindungsgemäßen Bordnetzes mit einem Schalter,
- FIG 4: ein weiteres Prinzipschaltbild eines erfindungsgemäßen Bordnetzes mit einem zweipoligen Schalter,
- FIG 5 bis 8: Ausführungsbeispiele eines Energieversorgungssystems mit parallel angeordneten Hilfsbetriebeumrichtern und einer dreiphasigen AC-Sammelschiene.

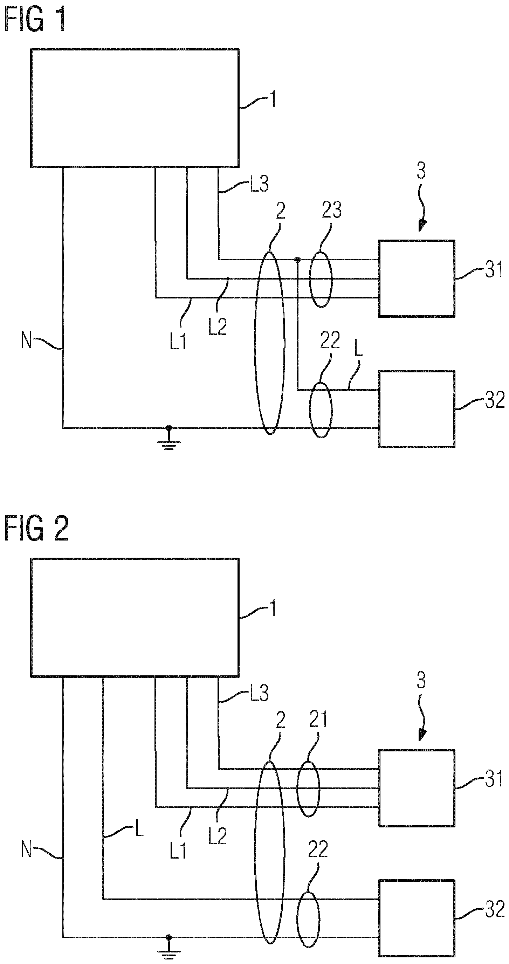

In FIG 1 ist ein Hilfsbetriebeumrichter 1 dargestellt, der die elektrischen Verbraucher 3 mit elektrischer Energie versorgt. Zur Vereinfachung ist in dieser Figur nur ein Hilfsberiebeumrichter 1 der parallelgeschalteten Hilfsbetriebeumrichter 1 des Fahrzeugs dargestellt. Dabei ist ein dreiphasiger elektrischer Verbraucher 31 an das dreiphasige Energieversorgungsnetz 21 angeschlossen. Der einphasige Verbraucher 32 ist mit dem einphasigen Energieversorgungsnetz 22 verbunden. Der N-Leiter N des einphasigen Energieversorgungsnetzes 22 ist mit dem Erdpotential verbunden. Bei dem hier dargestellten Ausführungsbeispiel stellt der Hilfsbetriebeumrichter 1 an seinen Ausgängen die drei Phasen L1, L2, L3 zur Speisung des dreiphasigen Energieversorgungsnetzes 21 zur Verfügung. Ein weiterer Ausgang bildet den N-Leiter N des einphasigen Energieversorgungsnetzes 22. Die Phase L des einphasigen Energieversorgungsnetzes wird durch eine elektrisch leitende Verbindung mit der Phase L1 des dreiphasigen Energieversorgungsnetzes 21 gebildet. Alternativ ist es auch möglich, die Phase L des einphasigen Energieversorgungsnetzes 22 aus der Phase L2 oder der Phase L3 des dreiphasigen Energieversorgungsnetzes 21 zu bilden. Das gesamte Energieversorgungsnetz 2 umfasst das dreiphasige Energieversorgungsnetz 21 und das einphasige Energieversorgungsnetz 22. Ein Fahrzeug, insbesondere ein Schienenfahrzeug, weist eine Vielzahl von elektrischen Verbrauchern 3 sowohl dreiphasige elektrische Verbraucher 31 als auch einphasige elektrische Verbraucher 32 auf, wobei in der Darstellung der FIG 1 zur Vereinfachung lediglich jeweils ein dreiphasiger Verbraucher 31 und ein einphasiger Verbraucher 32 dargestellt ist.

FIG 2 zeigt eine alternative Ausführung bei der die Phase L des einphasigen Energieversorgungsnetzes 22 auch direkt am Ausgang vom Hilfsbetriebeumrichter 1 bereitgestellt wird. Auch in diesem Ausführungsbeispiel ist zur Vereinfachung nur ein Hilfsbetriebeumrichter 1 der wechselspannungsseitig parallelgeschalteten 3AC-Hilfsbetriebeumrichter 1 des Fahrzeugs dargestellt. Dabei kann das Potential der Phase L identisch sein mit einem Potential der Phasen L1, L2, L3. des dreiphasigen Energieversorgungsnetzes 21 oder davon unabhängig sein. Der Vorteil dieser Anordnung besteht darin, dass das Potential der Phase L des einphasigen Energieversorgungsnetzes 22 direkt im Hilfsbetriebeumrichter 1 erzeugt wird und dadurch vom Hilfsbetriebeumrichter 1 steuerbar bzw. regelbar ist. Der Hilfsbetriebeumrichter 1 kann beispielsweise die Phase L des einphasigen Energieversorgungsnetzes 22 durch Verbindung mit einem Ausgang, der zur Speisung der drei Phasen L1, L2, L3 des dreiphasigen Energieversorgungsnetzes 21 vorgesehen ist, erzeugen. Auch eine Umschaltung der Phase L zwischen den Phasen L1, L2, L3 hat sich als günstig erwiesen. Darüber hinaus kann der Stromfluss zwischen dem einphasigem Energieversorgungsnetz 22 und dem Hilfsbetriebeumrichter 1 einfach, z.B. mittels eines hier nicht dargestellten Schalters unterbrochen werden. Zur Vermeidung von Wiederholungen bezüglich übereinstimmender Bestandteile des Systems wird auf die Beschreibung zu der FIG 1 sowie auf die dort eingeführten Bezugszeichen verwiesen.

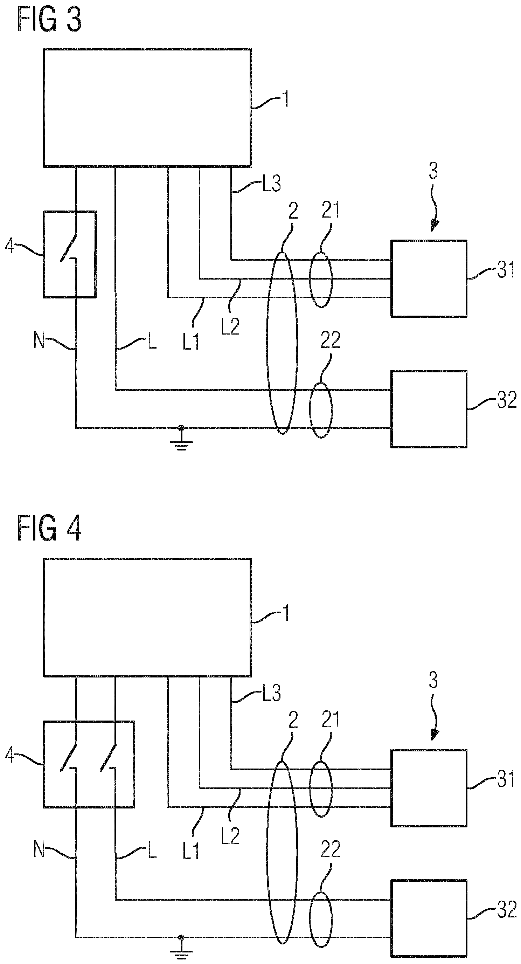

FIG 3 zeigt ein weiteres Ausführungsbeispiel eines Bordnetzes eines Fahrzeugs gemäß FIG 2, wobei in die Verbindung zwischen Hilfsbetriebeumrichter 1 und dem Energieversorgungsnetz 2 ein Schalter 4 zur Unterbrechung des Stromflusses zwischen Hilfsbetriebeumrichter 1 und Energieversorgungsnetz 2 geschaltet ist. Zur Vermeidung von Wiederholungen bezüglich übereinstimmender Bestandteile des Systems wird auf die Beschreibung zu den FIG 1 und FIG 2 sowie auf die dort eingeführten Bezugszeichen verwiesen. Auch in diesem Ausführungsbeispiel ist zur Vereinfachung nur ein Hilfsbetriebeumrichter 1 der wechselspannungsseitig parallel schaltbaren 3AC-Hilfsbetriebeumrichter 1 des Fahrzeugs dargestellt. Die Unterbrechung erfolgt in diesem Ausführungsbeispiel beim geerdeten N-Leiter N. Der hier dargestellte N-Leiter ist dem einphasigen Energieversorgungsnetz 22 zugeordnet. Es hat sich darüber hinaus auch als vorteilhaft erwiesen, wenn auch das dreiphasige Energieversorgungsnetz 21 einen N-Leiter aufweist. Dabei kann es sich um einen separaten N-Leiter handeln oder es kann der N-Leiter des einphasigen Energieversorgungsnetzes 22 genutzt werden. Dann kann zwischen einer Phase L1, L2, L3 des dreiphasigen Energieversorgungsnetzes 21 und einem N-Leiter einphasige Verbraucher 32 angeschlossen werden. Dabei hat es sich als besonders vorteilhaft erwiesen, auch diese Verbindung zwischen Hilfsbetriebeumrichter 1 und geerdetem N-Leiter des dreiphasigen Energieversorgungsnetzes 21 mit einem Schalter 4 zu versehen, der den Stromfluss zwischen Hilfsbetriebeumrichter 1 und N-Leiter N des dreiphasigen Energieversorgungsnetzes 21 unterbricht. Dabei kann der Schalter 4 in der Zuleitung zwischen Hilfsbetriebeumrichter 1 und Energieversorgungsnetz 2 angeordnet sein. Eine günstige Alternative besteht darin, den Schalter 4 zur Unterbrechung des Stromes zwischen Hilfsbetriebeumrichter 1 und Energieversorgungsnetz 2 im Hilfsbetriebeumrichter 1 anzuordnen. In diesem Fall kann der Schalter 4 direkt durch die Steuerung/Regelung des Hilfsbetriebeumrichters 1 angesteuert werden.

FIG 4 zeigt ein weiteres Ausführungsbeispiel eines Bordnetzes für ein Fahrzeug, bei dem der Schalter zweipolig ausgeführt ist. Dieser Schalter 4 hat die Aufgabe im Erdschlussfall neben der Unterbrechung des Stromes zwischen Hilfsbetriebeumrichter 1 und N-Leiter des Energieversorgungsnetzes 2 auch die Phase L des einphasigen Energieversorgungsnetzes zu unterbrechen. Damit kann sichergestellt werden, dass im Falle eines Erdschlusses das einphasige Energieversorgungsnetz 22 spannungsfrei geschaltet wird. Die Gefahr für Personen, insbesondere für Wartungspersonal, mit einer gefährlichen Spannung in Berührung zu kommen, wird dadurch erheblich reduziert. Zur Vermeidung von Wiederholungen bezüglich übereinstimmender Bestandteile des Systems wird auf die Beschreibung zu den Figuren 1, 2 und 3 sowie auf die dort eingeführten Bezugszeichen verwiesen. Auch in diesem Ausführungsbeispiel ist zur Vereinfachung nur ein Hilfsbetriebeumrichter 1 der parallel schaltbaren 3AC-Hilfsbetriebeumrichter 1 des Fahrzeugs dargestellt.

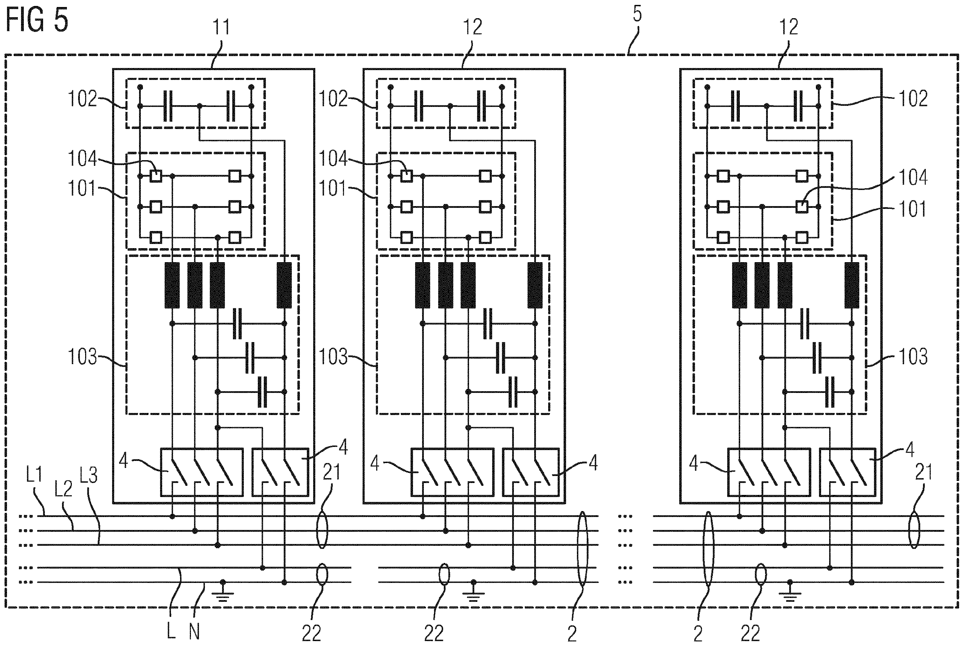

FIG 5 zeigt ein Ausführungsbeispiel eines Energieversorgungssystems 5 mit mehreren parallel angeordneten Hilfsbetriebeumrichtern 11 und 12. Dabei speisen die parallel schaltbaren 3AC-Hilfsbetriebeumrichter gleichzeitig die Phasen L1, L2, L3 des dreiphasigen Energieversorgungsnetzes 21. Dieses dreiphasige Energieversorgungsnetzes 21 ist als dreiphasige AC-Sammelschiene ausgeführt. Darüber hinaus existieren noch einphasige Energieversorgungsnetze 22, wobei jedes dieser einphasigen Energieversorgungsnetze 22 über einen der Hilfsbetriebeumrichter 11, 12 gespeist wird. Die Parallelschaltung der Hilfsbetriebeumrichter 11, 12 stellt sicher, dass auch bei Ausfall eines oder mehrerer Hilfsbetriebeumrichter 11, 12 das dreiphasige Energieversorgungsnetz 21 zuverlässig mit elektrischer Energie versorgt wird. Um im Falle eines Fehlers eines Hilfsbetriebeumrichters 11, 12 diesen von dem dreiphasigen Energieversorgungsnetz 21 trennten zu können, sind in den Hilfsbetriebeumrichtern 11, 12 Schalter 4 vorgesehen. Diese Schalter 4 ermöglichen eine Trennung der für die Speisung des Energieversorgungsnetzes 2 vorgesehenen Ausgänge von dem Energieversorgungsnetz 2. Darüber hinaus erlauben die Schalter 4 die Unterbrechung eines Stromflusses zwischen Hilfsbetriebeumrichter und N-Leiter des Energieversorgungssystems 5. Damit wird sichergestellt, dass das erfindungsgemäße Verfahren mit Hilfe des Energieversorgungssystems 5 ausführbar ist. Die Hilfsbetriebeumrichter 11, 12 weisen neben den Schaltern 4 eine Brückenschaltung 101 mit Leistungshalbleitern 104, Zwischenkreiskondensatoren 102 und ein Filter 103 auf. Auf die Schaltung zur Aufnahme von Energie aus einer Fahrdrahtleitung oder einem Dieselgenerator wurde aus Gründen der Übersichtlichkeit verzichtet. Die Brückenschaltung 101 weist Leistungshalbleiter 104 auf, die in einer Brückenschaltung angeordnet sind. Dabei umfasst jeder Leistungshalbleiter 104 einen Halbleiterschalter und eine dazu antiparallel geschaltete Diode. Der Zwischenkreiskondensator 102 dient der Glättung der Zwischenkreisspannung. Aus dieser Zwischenkreisspannung wird mit Hilfe der Brückenschaltung 101 mit Leistungshalbleitern 104 am Ausgang des Hilfsbetriebeumrichters 11, 12 eine Spannung mit regelbarer Spannungshöhe und regelbarer Frequenz bzw. Phasenlage erzeugt. Das Filter 103 dient zur Filterung unerwünschter Oberschwingungen. Mit seiner Hilfe ist es möglich, einen hinreichend genauen Sinusverlauf der Ausgangsspannung des Hilfsbetriebeumrichters 11, 12 zu erzeugen. Im Falle eines Erdschlusses im dreiphasigen Energieversorgungssystem 21 werden die Schalter 4 geöffnet, die mit dem einphasigen Energieversorgungsnetz 22 verbunden sind. Damit wird sichergestellt, dass es aufgrund des Erdschlusses zu keinen Kurzschlussströmen innerhalb der Hilfsbetriebeumrichters 11, 12 kommen kann. Darüber hinaus wird sichergestellt, dass die für den Betrieb des Fahrzeugs, insbesondere Schienenfahrzeugs, notwendigen elektrischen Verbraucher zuverlässig mit Energie versorgt werden können. Ein kurzfristiger Ausfall des dreiphasigen Energieversorgungsnetzes 21 wirkt sich dabei nicht negativ auf die Verfügbarkeit des Fahrzeugs aus. Anders formuliert hat auch der kurzfristige Ausfall des dreiphasigen Energieversorgungsnetzes 21 keine Auswirkung auf den Betrieb des Fahrzeugs.

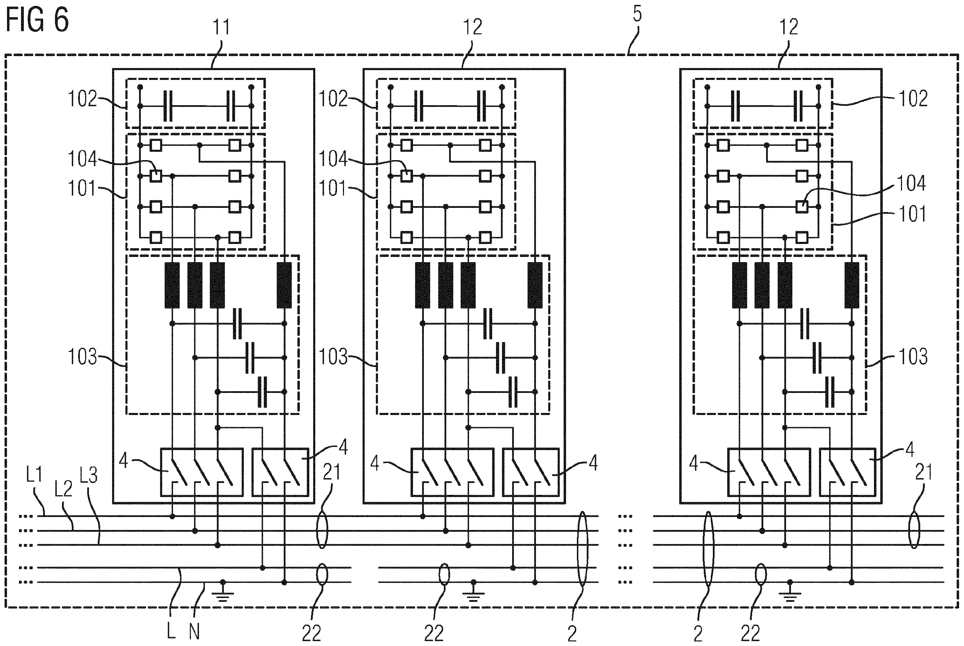

FIG 6 zeigt ein weiteres Ausführungsbeispiel eines Energieversorgungssystems 5 für ein Fahrzeug. Zur Vermeidung von Wiederholungen bezüglich übereinstimmender Bestandteile des Systems wird auf die Beschreibung zu der Figur 5 sowie auf die dort eingeführten Bezugszeichen verwiesen. Dieses in FIG 6 dargestellte Ausführungsbeispiel unterscheidet sich von dem der FIG 5 durch die Brückenschaltung 101 mit Leistungshalbleitern 104 innerhalb des Hilfsbetriebeumrichters 11, 12. Dabei wurde der Ausgang des Hilfsbetriebeumrichters 11, 12, der zur Verbindung mit dem N-Leiter des Energieversorgungsnetzes 2 dient, nicht mit dem Mittelpunkt der in Reihe geschalteten Zwischenkreiskondensatoren 102 sondern mit einem weiteren Brückenzweig einer Brückenschaltung 101 mit Leistungshalbleitern 104 verbunden. Mit dieser Schaltung ist es möglich, am Ausgang des Hilfsbetriebeumrichters 1 eine Spannung zu erzeugen, die geringere Oberschwingungen aufweist. Diese Anordnung erlaubt, das Filter 103 kleiner und kostengünstiger zu konstruieren. Gleichzeitig wird die Qualität der Ausgangsspannung des Hilfsbetriebeumrichters 1 weiter erhöht. Dies zeigt sich daran, dass die Spannung am Ausgang einer Sinusform entspricht.

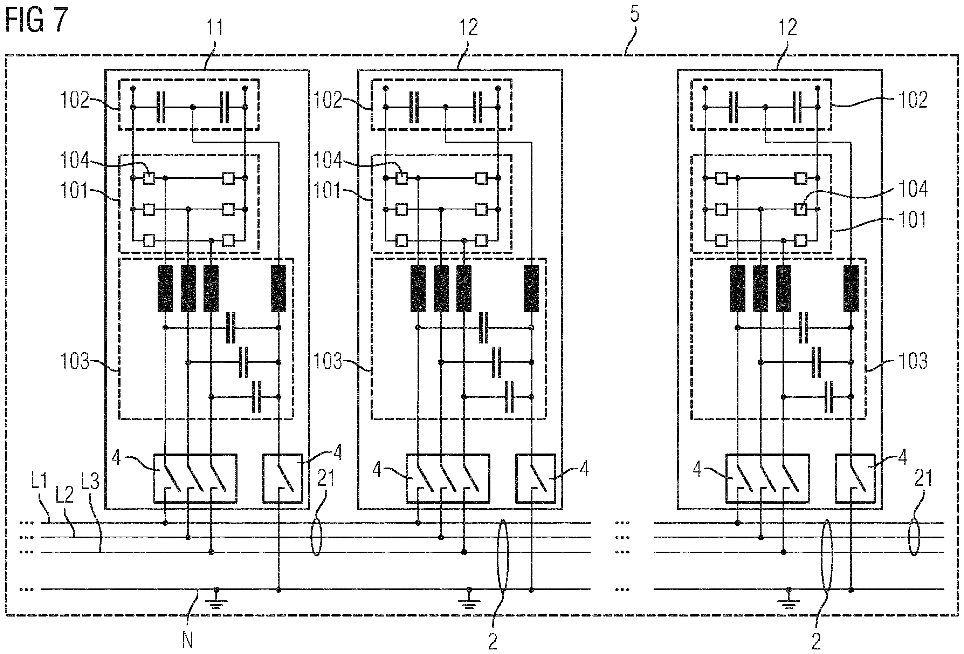

FIG 7 zeigt ein weiteres Ausführungsbeispiel eines erfindungsgemäßen Energieversorgungssystems 5. Zur Vermeidung von Wiederholungen bezüglich übereinstimmender Bestandteile des Systems wird auf die Beschreibung zu den Figuren 5 und 6 sowie auf die dort eingeführten Bezugszeichen verwiesen. Dieses Ausführungsbeispiel verzichtet auf ein einphasiges Energieversorgungsnetz 22. Aus den Hilfsbetriebeumrichtern 11, 12 wird ein dreiphasiges Energieversorgungsnetz 21 gespeist, das als dreiphasige Sammelschiene ausgestaltet ist. Darüber hinaus ist ein geerdeter N-Leiter mit dem Hilfsbetriebeumrichter 11, 12 verbunden. Durch Wegfall des einphasigen Energieversorgungsnetzes kann dieses Energieversorgungssystem 5 kostengünstiger hergestellt werden. Bei diesem Energieversorgungssystem 5 werden einphasige Verbraucher 32, die in dieser Figur der Übersichtlichkeit halber nicht dargestellt sind, mit einer der Phasen L1, L2 und L3 des dreiphasigen Energieversorgungsnetzes 21 und dem N-Leiter N verbunden. Im Falle eines Erdschlusses wird der Stromfluss zwischen Hilfsbetriebeumrichtern 11, 12 und N-Leiter N unterbrochen. Dies geschieht über den Schalter 4, der an dem Ausgang des Hilfsbetriebeumrichters 11, 12 angeordnet ist, und die Verbindung zum N-Leiter herstellt. Es hat sich als vorteilhaft erwiesen, wenn bei dieser Konfiguration die einphasigen Verbraucher 22 durch eine Schutzvorrichtung dahingehend gesichert werden dass bei Unterbrechung des Stromflusses zwischen N-Leiter und Hilfsbetriebeumrichter 1 auch die entsprechende spannungsführende Phase von der einphasigen Last getrennt wird.

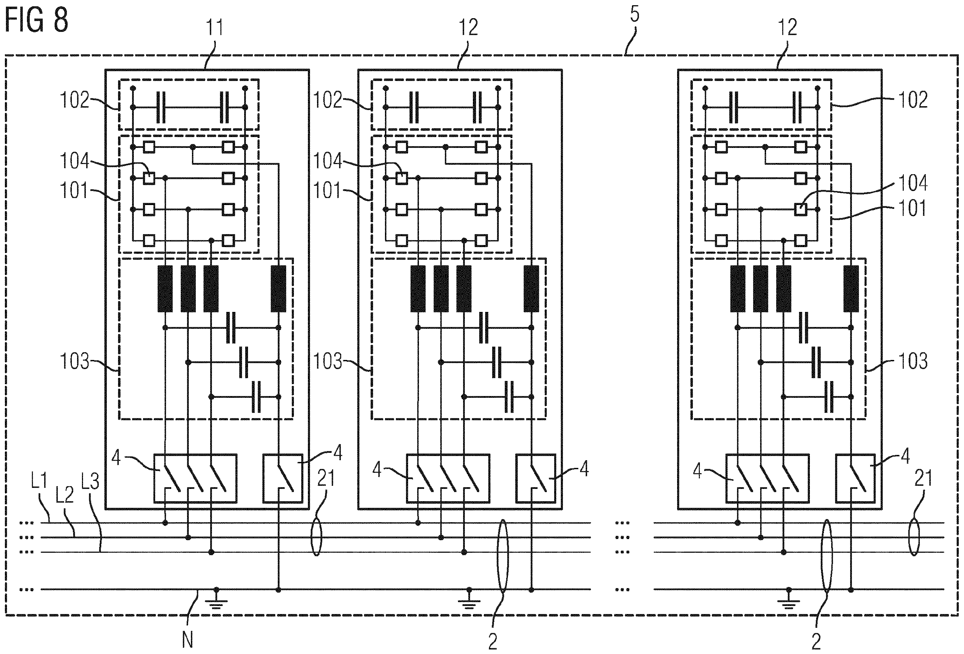

FIG 8 zeigt ein weiteres Ausführungsbeispiel eines erfindungsgemäßen Energieversorgungssystems 5. Dieses entspricht im Wesentlichen der Ausführungsform entsprechend FIG 7 allerdings ist der Ausgang des Hilfsbetriebeumrichters 11, 12 der für eine Verbindung mit dem N-Leiter vorgesehen ist, elektrisch leitend mit einer vierten Phasen einer Brückenschaltung 101 mit Leistungshalbleitern 104 verbunden. Zur Vermeidung von Wiederholungen bezüglich übereinstimmender Bestandteile des Systems wird auf die Beschreibung zu den Figuren 5 bis 7 und die dort eingeführten Bezugszeichen verwiesen. Im Gegensatz zum Ausführungsbeispiel nach FIG 7 bei der dieser Ausgang innerhalb des Hilfsbetriebeumrichters 11, 12 mit dem Mittelpunkt zweier in Reihe geschalteter Zwischenkreiskondensatoren 102 verschaltet ist, kann die Qualität der Spannung an den Ausgängen des Hilfsbetriebeumrichters 11, 12 die zum Anschluss an die Phasen L1, L2 und L3 des dreiphasigen Energieversorgungsnetzes 21 vorgesehen sind, weiter erhöht werden indem die Brückenschaltung 101 mit Leistungshalbleitern 104 um einen Brückenzweig erweitert wird, an dem die Verbindung zum N-Leiter N angeschlossen wird. Das bedeutet, dass die Abweichung dieser Spannungen von einer idealen Sinusform geringer ist. Dadurch ist es möglich, das Filter 103 des Hilfsbetriebeumrichters 11, 12 einfacher und damit leichter und kostengünstiger auszuführen. Auch bei dieser Anordnung werden einphasige Verbraucher 32 aus einer der Phasen L1, L2 oder L3 des dreiphasigen Energieversorgungsnetzes 21 und dem N-Leiter versorgt. Zur Sicherstellung eines ordnungsgemäßen Betriebs, zur Sicherstellung des Personenschutzes und zum Schutz der eingeschlossenen einphasigen Verbraucher hat es sich als vorteilhaft erwiesen, wenn bei Unterbrechung des Stromflusses zwischen dem N-Leiter des Energieversorgungsnetzes 2 und dem Hilfsbetriebeumrichter 11, 12 auch die Verbindung zwischen der Phase, die für die Versorgung des einphasigen Verbrauchers 32 und dem einphasigen Verbraucher 32 unterbrochen wird.

Obwohl die Erfindung im Detail durch die bevorzugten Ausführungsbeispiele näher illustriert und beschrieben wurde, ist die Erfindung nicht allein auf das offenbarte Beispiel beschränkt und andere Variationen können vom Fachmann hieraus abgeleitet werden, ohne den Schutzumfang der Erfindung zu verlassen.

## Patentansprüche

1. Verfahren zur Versorgung von elektrischen Verbrauchern (3, 31,32) eines Fahrzeugs mit elektrischer Energie mittels wechselspannungsseitig parallel geschalteter Hilfsbetriebeumrichter (1,11,12), wobei im Falle eines Erdschlusses der Stromfluss zwischen Hilfsbetriebeumrichter (1,11,12) und einem geerdeten N-Leiter (N) eines Energieversorgungsnetz (2,22) unterbrochen wird, wobei die wechselspannungsseitig parallel geschalteten Hilfsbetriebeumrichter grundwellen- und pulssynchron betrieben werden.

2. Verfahren nach Anspruch 1, **dadurch gekennzeichnet, dass** der Erdschluss in einem für die Versorgung der elektrischen Verbraucher (3,31,32) vorgesehenen Energieversorgungsnetz (2,21,22) auftritt.

3. Verfahren nach einem der Ansprüche 1 oder 2, **dadurch gekennzeichnet , dass** es sich bei dem Fahrzeug um ein Schienenfahrzeug handelt und bei dem die wechselspannungsseitig parallel geschalteten Hilfsbetriebeumrichter (1,11,12) ein Bordnetz des Schienenfahrzeugs speisen.

4. Verfahren nach einem der Ansprüche 1 bis 3, **dadurch gekennzeichnet, dass** der Stromfluss durch Öffnen eines Schalters (4) unterbrochen wird.

5. Verfahren nach einem der Ansprüche 1 bis 4 mit mindestens zwei Hilfsbetriebeumrichtern (1,11,12), **dadurch gekennzeichnet, dass** bei Erkennung eines Erdschlusses die folgenden Schritte durchgeführt werden:
- Abschalten der Hilfsbetriebeumrichter (1,11,12),
- Öffnen des Schalters (4) zur Unterbrechung des Stromflusses zwischen den Hilfsbetriebeumrichtern (1,11,12) und dem Energieversorgungsnetz (2,21,22),
- Einschalten eines ersten Hilfsbetriebeumrichters (11),
- Einschalten mindestens eines weiteren Hilfsbetriebeumrichters (12), wobei der weitere Hilfsbetriebeumrichter (12) sich beim Einschaltvorgang insbesondere bezüglich Frequenz und Spannungshöhe auf den ersten Hilfsbetriebeumrichter (11) synchronisiert und
- nach festgestellter Erdschlussfreiheit wird der Schalter (4) zur Unterbrechung des Stromflusses zwischen den Hilfsbetriebeumrichtern (1,11,12) und dem Energieversorgungsnetz (2,21,22) geschlossen.

6. Energieversorgungssystem (5) eines Fahrzeugs, insbesondere eines Schienenfahrzeugs, zur Durchführung eines Verfahrens nach einem der Ansprüche 1 bis 5 umfassend:
- mindestens zwei parallel angeordnete Hilfsbetriebeumrichter (1,11,12)
- ein Energieversorgungsnetz (2,21,22) zur Versorgung von elektrischen Verbrauchern (3,31,32)
- mindestens einen Schalter (4) zur Unterbrechung eines Stromflusses zwischen Hilfsbetriebeumrichter (1,11,12) und Energieversorgungsnetz (2,21,22)

7. Energieversorgungssystem (5) nach Anspruch 6, **dadurch gekennzeichnet, dass** das Energieversorgungssystem (5) mindestens eine Erdschlussüberwachungseinrichtung aufweist.

8. Energieversorgungssystem (5) nach Anspruch 6 oder 7, **dadurch gekennzeichnet, dass** der Schalter (4) im Hilfsbetriebeumrichter (1,11,12) angeordnet ist.

9. Energieversorgungssystem (5) nach einem der Ansprüche 6 bis 8, **dadurch gekennzeichnet, dass** das Energieversorgungssystem ein dreiphasiges Energieversorgungsnetz (21) und ein einphasiges Energieversorgungsnetz (22) aufweist, die galvanisch miteinander verbunden sind.

10. Energieversorgungssystem (5) nach Anspruch 9, **dadurch gekennzeichnet, dass** die galvanische Verbindung über den Hilfsbetriebeumrichter (1,11,12) ausgeführt ist.

## Claims

1. Method for supplying electrical loads (3, 31, 32) of a vehicle with electrical energy by means of auxiliary converters (1, 11, 12) switched in parallel on the AC voltage side, wherein in the event of a short circuit to ground, the flow of current between auxiliary converter (1, 11, 12) and a grounded N conductor (N) of an energy supply network (2, 22) is interrupted, wherein the auxiliary converters switched in parallel on the AC voltage side are operated with fundamental wave and pulse synchronicity.

2. Method according to claim 1, **characterised in that** the short circuit to ground occurs in an energy supply network (2, 21, 22) intended for the supply of electrical loads (3, 31, 32).

3. Method according to claim 1 or 2, **characterised in that** the vehicle involves a rail vehicle and in which the auxiliary converters (1, 11, 12) switched in parallel on the AC voltage side feed an on-board network of the rail vehicle.

4. Method according to claim 1 to 3, **characterised in that** the flow of current is interrupted by opening a switch (4).

5. Method according to one of claims 1 to 4 with at least two auxiliary converters (1, 11, 12), **characterised in that**, on detection of a short to ground, the following steps are carried out:
- Switching off the auxiliary converters (1, 11, 12),
- Opening the switch (4) for interrupting the flow of current between the auxiliary converters (1, 11, 12) and the energy supply network (2, 21, 22),
- Switching on a first auxiliary converter (11),
- Switching on at least one further auxiliary converter (12), wherein the further auxiliary converter (12) is synchronised during the switching-on process, especially as regards frequency and voltage level, with the first auxiliary converter (11), and
- After freedom from short circuit to ground has been established, the switch (4) to interrupt the flow of current between the auxiliary converters (1, 11, 12) and the energy supply network (2, 21, 22) is closed again.

6. Energy supply system (5) of a vehicle, especially a rail vehicle, for carrying out a method according to one of claims 1 to 5, comprising:
- At least two auxiliary converters (1, 11, 12) arranged in parallel,
- An energy supply network (2, 21, 22) for the supply of electrical loads (3, 31, 32),
- At least one switch (4) for interrupting a flow of current between auxiliary converter (1, 11, 12) and energy supply network (2, 21, 22).

7. Energy supply system (5) according to claim 6, **characterised in that the** energy supply system (5) has at least one short circuit to ground monitoring facility.

8. Energy supply system (5) according to claim 6 or 7, **characterised in that** i n that the switch (4) is arranged in the auxiliary converter (1, 11, 12).

9. Energy supply system (5) according to one of claims 6 to 8, c h a r a c t e r i s e d i n that the energy supply system has a three-phase energy supply network (21) and a single-phase energy supply network (22) that are connected galvanically to one another.

10. Energy supply system (5) according to claim 9, **characterised in that** the galvanic connection is implemented via the auxiliary converters (1, 11, 12).

## Revendications

1. Procédé d'alimentation en énergie électrique de consommateurs ( 3, 31 32 ) électriques d'un véhicule au moyen de convertisseurs ( 1, 11, 12 ) auxiliaires de fonctionnement montés en parallèle du côté de la tension alternative, dans lequel, s'il se produit une perte à la terre, on interrompt le flux de courant entre le convertisseur ( 1, 11, 12 ) auxiliaire de fonctionnement et un conducteur ( N ) mis à la terre d'un réseau ( 2, 22 ) d'alimentation en énergie, dans lequel on fait fonctionner, en onde fondamentale et en synchronisme d'impulsion, les convertisseurs auxiliaires de fonctionnement montés en parallèle du côté de la tension alternative.

2. Procédé suivant la revendication 1, **caractérisé en ce que** la perte à la terre se produit dans un réseau (2, 21, 22 ) d'alimentation en énergie prévu pour l'alimentation des consommateurs (3, 31, 32 ) électriques.

3. Procédé suivant l'une des revendications 1 ou 2, **caractérisé en ce que** le véhicule est un véhicule ferroviaire et dans lequel les convertisseurs (1, 11, 12 ) auxiliaires de fonctionnement montés en parallèle du côté de la tension alternative alimentent un réseau de bord du véhicule ferroviaire.

4. Procédé suivant l'une des revendications 1 à 3, **caractérisé en ce qu'**on interrompt le flux de courant en ouvrant un interrupteur ( 4 ).

5. Procédé suivant l'une des revendications 1 à 4, comprenant au moins deux convertisseurs ( 1, 11, 12 ) auxiliaires de fonctionnement, **caractérisé en ce que**, lorsqu'une perte à la terre est détectée, on effectue les stades suivants :
- déconnexion des convertisseurs ( 1, 11, 12 ) auxiliaires de fonctionnement,
- ouverture de l'interrupteur ( 4 ) pour interrompre le flux de courant entre les convertisseurs ( 1, 11, 12 ) auxiliaires de fonctionnement et le réseau ( 2, 21, 22 ) d'alimentation en énergie,
- connexion d'un premier convertisseur ( 11 ) auxiliaire de fonctionnement,
- connexion d'au moins un autre convertisseur ( 12 ) auxiliaire de fonctionnement, l'autre convertisseur ( 12 ) auxiliaire de fonctionnement se synchronisant lors de la connexion, notamment en ce qui concerne la fréquence et l'amplitude de la tension, sur le premier convertisseur ( 11 ) auxiliaire de fonctionnement et
- après constatation qu'il n'y a plus de perte à la terre, on ferme l'interrupteur ( 4 ) d'interruption du flux de courant entre les convertisseurs ( 1, 11, 12 ) auxiliaires de fonctionnement et le réseau ( 2, 21, 22 ) d'alimentation en énergie.

6. Système ( 5 ) d'alimentation en énergie d'un véhicule, notamment d'un véhicule ferroviaire, pour effectuer un procédé suivant l'une des revendications 1 à 5 comprenant :
- au moins deux convertisseurs ( 1, 11, 12 ) auxiliaires de fonctionnement montés en parallèle
- un réseau ( 2, 21, 22 ) d'alimentation en énergie pour l'alimentation de consommateurs ( 3, 31, 32 ) électriques
- au moins un interrupteur ( 4 ) pour interrompre un flux de courant entre des convertisseurs ( 1, 11, 12 ) auxiliaires de fonctionnement et le réseau ( 2, 21, 22 ) d'alimentation en énergie.

7. Système ( 5 ) d'alimentation en énergie suivant la revendication 6, **caractérisé en ce que** le système ( 5 ) d'alimentation en énergie a au moins un dispositif de contrôle de perte à la terre.

8. Système ( 5 ) d'alimentation en énergie suivant la revendication 6 ou 7, **caractérisé en ce que** l'interrupteur ( 4 ) est monté dans le convertisseur ( 1, 11, 12 ) auxiliaire de fonctionnement.

9. Système ( 5 ) d'alimentation en énergie suivant l'une des revendications 6 à 8, **caractérisé en ce que** le système d'alimentation en énergie a un réseau ( 21 ) d'alimentation en énergie triphasé et un réseau ( 22 ) d'alimentation en énergie monophasé, qui sont séparés galvaniquement l'un de l'autre.

10. Système ( 5 ) d'alimentation en énergie suivant la revendication 9, **caractérisé en ce que** la liaison galvanique est réalisée par le convertisseur ( 1, 11, 12 ) auxiliaire de fonctionnement.
